# EUROPEAN PATENT SPECIFICATION

(11) **EP 3 245 050 B1**
(45) Date of publication and mention of the grant of the patent: **13.11.2019**
(21) Application number: 16738037.7
(22) Date of filing: 18.01.2016
(51) Int. Cl.: B29C 73/16, C08L 7/02, C09K 5/20

(54) **HIGH PERFORMANCE SEALANT COMPOSITION FOR TIRE REPAIR**
HOCHLEISTUNGSFÄHIGE DICHTMITTELZUSAMMENSETZUNG ZUM REPARIEREN VON REIFEN
COMPOSITION D'AGENT ÉTANCHÉIFIANT HAUTE PERFORMANCE POUR RÉPARATION DE PNEU

(30) Priority: 16.01.2015 US 201562104267 P; 16.11.2015 US 201514942868
(43) Date of publication of application: 22.11.2017
(73) Proprietor: Illinois Tool Works Inc., Glenview, IL 60025 (US)
(72) Inventor: SPINDLER, Martin Patrick, D-88634 Herdwangen-Schonach (DE); SULEMANJI, Shees N., Grover Beach, California 93433 (US); KLEMM, Henry Friedrich Ferdinand, D-88662 Ueberlingen (DE); HAENER, Brandt A., Los Osos, California 93402 (US); SMITH, Bryan Douglas, Arroyo Grande, California 93420 (US); CHETOSKY, Gordon, Hinsdale, Illinois 60521 (US)
(74) Representative: HGF Limited
(86) International application number: PCT/US2016/013809
(87) International publication number: WO 2016/115560

(56) References cited:
- EP-A1- 2 719 665
- US-A- 5 371 136
- US-A- 5 856 376
- US-A1- 2004 048 962
- US-A1- 2011 201 722
- US-A1- 2012 125 235
- US-A1- 2012 125 235

## Description

### FIELD OF THE INVENTION

This invention is directed to a high performance sealant for repairing leaks in tires according to claim 1.

### BACKGROUND OF THE INVENTION

Various puncture sealing agents have been used for repairing leaks in tires. U.S. Patent Nos. 7,388,041 and 7,868,061, both to Cegelski et al., disclose a puncture sealing agent that includes a rubber latex, an adhesive agent and an antifreeze agent. The antifreeze agent can be glycerin, potassium acetate, or a solution of glycerin and potassium acetate. U.S. Patent 8,772,370, issued to Sulemanji, discloses an environmentally safe, biodegradable aqueous antifreeze solution and a puncture sealing composition containing it. The antifreeze solution includes an antifreeze agent selected from trimethyl glycine, dimethyl sulfoxide, and derivatives and combinations thereof.

Other conventional water-based antifreeze agents include aqueous mixtures of ethylene glycol and/or propylene glycol. Conventional puncture sealing agents are relatively viscous and cannot be injected through the valve stem of a tire without removing the core and seal. Conventionally, the higher viscosity has been needed in order for the puncture sealing agent to effectively seal the tires.

There is a need or desire for a higher performance puncture sealing agent that can be injected through the valve stem without removing the core and seal, which provides a high performance sealing of the punctures in the tires.

### SUMMARY OF THE INVENTION

The present invention is directed to a high performance sealant for repairing leaks in tires. The sealant includes a highly filtered natural rubber latex substantially free of coagulants, achieved by filtering the natural rubber latex. The sealant also includes an ultra-fine inorganic powder to enhance puncture sealing capability, an anti-settling agent to keep the ultra-fine inorganic powder in suspension, and an aqueous anti-freeze agent.

The combination of natural rubber latex substantially free of coagulating agent, ultra-fine inorganic powder and anti-settling agent provide the high performance sealant with the small particle size and limited viscosity needed to enable injection of the sealant through the valve stem of a tire without removing the core and seal. The combination of ingredients also provides a highly effective sealing of tire punctures notwithstanding the relatively low viscosity of the sealant.

With the foregoing in mind, it is a feature and advantage of the invention to provide a high performance sealant for tire repair that is relatively easy to inject without compromising the integrity of the repair. The foregoing and other features and advantages of the invention will become further apparent from the following Detailed Description of the Invention.

US patent application US2012/125235 discloses an aqueous pigment anti-settling agent which, when added to an aqueous coating material, demonstrates pigment anti-settling effect, and in particular, demonstrates pigment anti-settling effect even under a high-temperature environment.

US patent application US2011/201722 discloses a tire puncture sealant. Such a sealant may include a natural rubber latex and a surfactant, wherein a content of the surfactant is from 1.0 to 6.0 mass % of a solid content of the natural rubber latex and the surfactant includes a non-ionic surfactant and an anionic surfactant at a mass ratio where the non-ionic surfactant/the anionic surfactant=1.0/1.0 to 1.0/5.0.

### DETAILED DESCRIPTION OF THE INVENTION

The high performance sealant of the invention includes a natural rubber latex substantially free of coagulants, an ultra-fine inorganic powder, an anti-settling agent, and an aqueous antifreeze agent. The natural rubber latex is suitably filtered through a mesh screen, for example a 300-500-mesh screen, suitably a 400-mesh screen, to remove coagulants and control the particle size of the natural rubber latex. By pumping natural rubber latex through a mesh screen, the average particle size of the natural rubber latex that pushes through the screen can be controlled to about 400 microns or less and be substantially free of coagulants. This places the natural rubber latex in a fine, flowing state that enables passage through the valve stem of a tire without removing the core and seal.

Suitable filtered natural rubber latexes include without limitation high ammonia natural rubber latexes sold by Centrotrade Rubber, Inc. under the name CENTEX HF. CENTEX HF has a total solid content of about 61-63% by weight, a dry rubber content of about 59-61% by weight, an ammonia content of 0.06-0.08 by weight, with a balance substantially of water. The natural rubber latex can be present in the high performance sealant in an amount of about 20-50% by weight, suitably about 30-40% by weight.

The inorganic powder should also have an ultra-fine particle size in order to facilitate passage of the high performance sealant through the valve stem of a tire, without removing the core and seal. The inorganic powder may suitably have an average particle diameter of about 150 nanometers or less, suitably about 100 nanometers or less, or about 50-80 nanometers. Suitable inorganic powders include without limitation calcium carbonate, barium carbonate, silicon dioxide, titanium dioxide, calcium sulfate, barium sulfate, aluminum oxide, and the like. The ultra-fine inorganic powder can be present in the high performance sealant at about 0.25-10.0% by weight, suitably about 0.5-2.5% by weight. The ultra-fine inorganic powder, combined with the filtered natural rubber latex that is substantially free of coagulants, together facilitate the formation of a strong and long-lasting sealing and repair of the punctured tire.

The polyamide suspension operates as an anti-settling agent to keep the ultra-fine inorganic powder in suspension during storage and use of the high performance sealant. One suitable polyamide suspension is DISPARLON® AQH-800, available from King Industries, Ltd. AQH-800 is a paste-like suspension of a proprietary polyamide in a solvent that includes water and propylene glycol monomethyl ether. The polyamide suspension can be present in the high performance sealant at about 0.10-5.0% by weight, suitably about 0.20-1.2% by weight. The polyamide suspension can also be combined with similar amounts of a silica suspension for improved anti-settling properties.

The aqueous antifreeze agent can include water and at least one of ethylene glycol and propylene glycol. The aqueous antifreeze agent can be present in the high performance sealant at about 30-70% by weight, suitably about 40-60% by weight. The water can constitute about 10-30% by weight of the antifreeze agent, suitably about 15-25% by weight, and can constitute about 5-15% by weight of the high performance sealant, suitably about 8-12% by weight. The ethylene glycol and/or propylene glycol can constitute the balance of the antifreeze agent and can constitute about 20-60% by weight of the high performance sealant, suitably about 30-50% by weight. When ethylene glycol and propylene glycol are both present, the ethylene glycol can constitute about 30-70% by weight, suitably about 40-60% by weight of the antifreeze agent and can constitute about 15-35% by weight, suitably about 20-30% by weight of the high performance sealant. The propylene glycol can then constitute about 10-50% by weight, suitably about 20-40% by weight of the antifreeze agent, and can constitute about 8-25% by weight, suitably about 12-20% by weight of the high performance sealant composition.

The high performance sealant also includes synthetic rubber latex in an amount of about 2-10% by weight, suitably about 3-8% by weight. Suitable synthetic rubber latexes include without limitation styrene-butadiene rubber, acrylonitrile butadiene rubber, ethylene vinyl acetate rubber, chloroprene rubber, vinyl pyridine rubber, and butyl rubber. The synthetic rubber latex aids in reinforcing the seal, but should be present in a small enough quantity and small enough particle size so as not to hinder passage of the high performance sealant through the valve stem of a tire.

The high performance sealant can also include a tackifier in an amount of about 3-15% by weight, suitably about 5-10% by weight. The tackifier serves as an adhesive agent for the high performance sealing composition, and should be selected from compounds that do not cause aggregation of the natural rubber latex or the synthetic rubber latex. Suitable tackifiers include without limitation terpene resins, phenolic resins, polyvinyl esters, polyvinyl alcohol, polyvinyl pyrrolidone, and the like.

By selecting the proper combination of ingredients and particle sizes, a high performance sealant can be provided that flows easily, does not aggregate prior to use, passes through valve stems without removing the core and seal, and then forms a strong and durable seal to repair the puncture.

### EXAMPLE

A high performance sealant was prepared having the following composition.

| **Ingredient** | **Product Name** | **Supplier** | **Percent by Weight** |
|---|---|---|---|
| Ethylene Glycol | | | 24.90 |
| Propylene Glycol | | | 15.68 |
| Deionized Water | | | 10.41 |
| Resin/Tackifier | | | 7.07 |
| Synthetic Latex | | | 4.63 |
| Natural Latex (High Ammonia) | CENTEX HF (filtered) | Centrotrade Rubber, Inc. | 34.73 |
| Ultra-fine Calcium Carbonate (50-80 nm) | | | 1.00 |
| Polyamide Suspension | DISPARLON® AQH-800 | King Industries, Ltd. | 0.50 |

The foregoing high performance sealant was passed through a valve stem of a tire without removing the stem and core, and formed a strong and durable seal in the punctured area.

The embodiments of the invention described herein are presently preferred. Various modifications and improvement can be made without departing from the scope of the invention. The scope of the invention is defined by the appended claims, and all changes that fall within the meaning and range of equivalents are intended to be embraced therein.

## Claims

1. A high performance sealant, comprising:
20% to 50% by weight of a natural rubber latex;
0.25% to 10% by weight of an inorganic powder;
0.10% to 5.0% by weight of a polyamide suspension;
30% to 70% by weight of an antifreeze agent including water and at least one of ethylene glycol and propylene glycol; and
2% to 10% by weight of a synthetic rubber latex.

2. The high performance sealant of Claim 1, wherein the natural rubber latex is filtered to remove coagulants.

3. The high performance sealant of Claim 1, wherein the natural rubber latex has an average particle size of about 400 microns or less.

4. The high performance sealant of Claim 1, wherein the inorganic powder has an average particle size of about 150 nanometers or less.

5. The high performance sealant of Claim 4, wherein the inorganic powder comprises calcium carbonate having an average particle size of about 100 nanometers or less.

6. The high performance sealant of Claim 1, wherein the natural rubber latex comprises natural rubber and ammonia.

7. The high performance sealant of Claim 1, wherein the antifreeze agent comprises about 30-70% by weight ethylene glycol, about 10-50% by weight propylene glycol, and about 10-30% by weight water.

8. The high performance sealant of Claim 1, further comprising about 3-15% by weight of a tackifier.

9. The high performance sealant of claim 1, wherein:
the natural rubber latex has an average particle size of about 400 microns or less; and
the inorganic powder has an average particle size of about 150 nanometers or less.

10. The high performance sealant of Claim 9, comprising:
about 30-40% by weight of the natural rubber latex;
about 0.5-2.5% by weight of the inorganic powder;
about 0.2-1.2% by weight of the polyamide suspension; and
about 40-60% by weight of the antifreeze agent.

11. The high performance sealant of Claim 9, wherein the antifreeze agent comprises about 40-60% by weight ethylene glycol, about 20-40% propylene glycol, and about 10-30% by weight water.

12. The high performance sealant of claim 1, wherein:
the natural rubber latex is filtered and has an average particle size of about 400 microns or less;
the inorganic powder has an average particle size of about 100 nanometers or less;
the aqueous polyamide suspension is present at about 0.10% to about 0.50% by weight;
the antifreeze includes both ethylene glycol and propylene glycol;
and further comprising about 3-15% by weight of a tackifier.

13. The high performance sealant of Claim 12, wherein the aqueous polyamide suspension is combined with aqueous colloidal silica.

## Patentansprüche

1. Hochleistungsdichtmittel, umfassend:
20 Gew.-% bis 50 Gew.-% an einem Naturkautschuklatex;
0,25 Gew.-% bis 10 Gew.-% an einem anorganischen Pulver;
0,10 Gew.-% bis 5,0 Gew.-% an einer Polyamidsuspension;
30 Gew.-% bis 70 Gew.-% an einem Frostschutzmittel, das Wasser und wenigstens eines von Ethylenglycol und Propylenglycol enthält; und
2 Gew.-% bis 10 Gew.-% an einem Synthesekautschuklatex.

2. Hochleistungsdichtmittel gemäß Anspruch 1, wobei der Naturkautschuklatex zum Entfernen von Koagulantien filtriert ist.

3. Hochleistungsdichtmittel gemäß Anspruch 1, wobei der Naturkautschuklatex eine mittlere Partikelgröße von etwa 400 Mikrometer oder weniger aufweist.

4. Hochleistungsdichtmittel gemäß Anspruch 1, wobei das anorganische Pulver eine mittlere Partikelgröße von etwa 150 Mikrometer oder weniger aufweist.

5. Hochleistungsdichtmittel gemäß Anspruch 4, wobei das anorganische Pulver Calciumcarbonat umfasst und eine mittlere Partikelgröße von etwa 100 Mikrometer oder weniger aufweist.

6. Hochleistungsdichtmittel gemäß Anspruch 1, wobei der Naturkautschuklatex Naturkautschuk und Ammoniak umfasst.

7. Hochleistungsdichtmittel gemäß Anspruch 1, wobei das Frostschutzmittel etwa 30-70 Gew.-% Ethylenglycol, etwa 10-50 Gew.-% Propylenglycol und etwa 10-30 Gew.-% Wasser umfasst.

8. Hochleistungsdichtmittel gemäß Anspruch 1, ferner umfassend etwa 3-15 Gew.-% an einem Klebrigmacher.

9. Hochleistungsdichtmittel gemäß Anspruch 1, wobei:
der Naturkautschuklatex eine mittlere Partikelgröße von etwa 400 Mikrometer oder weniger aufweist; und
das anorganische Pulver eine mittlere Partikelgröße von etwa 150 Mikrometer oder weniger aufweist.

10. Hochleistungsdichtmittel gemäß Anspruch 9, umfassend:
etwa 30-40 Gew.-% an dem Naturkautschuklatex;
etwa 0,5-2,5 Gew.-% an dem anorganischen Pulver;
etwa 0,2-1,2 Gew.-% an der Polyamidsuspension; und
etwa 40-60 Gew.-% an dem Frostschutzmittel.

11. Hochleistungsdichtmittel gemäß Anspruch 9, wobei das Frostschutzmittel etwa 40-60 Gew.-% Ethylenglycol, etwa 20-40 Gew.-% Propylenglycol und etwa 10-30 Gew.-% Wasser umfasst.

12. Hochleistungsdichtmittel gemäß Anspruch 1, wobei:
der Naturkautschuklatex filtriert ist eine mittlere Partikelgröße von etwa 400 Mikrometer oder weniger aufweist;
das anorganische Pulver eine mittlere Partikelgröße von etwa 100 Mikrometer oder weniger aufweist;
die wässrige Polyamidsuspension mit etwa 0,10 Gew.-% bis 0,50 Gew.-% vorhanden ist;
das Frostschutzmittel sowohl Ethylenglycol als auch Propylenglycol enthält;
und ferner umfassend etwa 3-15 Gew.-% an einem Klebrigmacher.

13. Hochleistungsdichtmittel gemäß Anspruch 12, wobei die wässrige Polyamidsuspension mit wässrigem kolloidalem Siliciumdioxid kombiniert ist.

## Revendications

1. Agent étanchéifiant haute performance, comprenant :
20 % à 50 % en masse d'un latex de caoutchouc naturel ;
0,25 % à 10 % en masse d'une poudre inorganique ;
0,10 % à 5,0 % en masse d'une suspension de polyamide ;
30 % à 70 % en masse d'un agent antigel incluant de l'eau et au moins l'un des membres du groupe constitué par l'éthylène glycol et le propylène glycol ; et
2 % à 10 % en masse d'un latex de caoutchouc synthétique.

2. Agent étanchéifiant haute performance selon la Revendication 1, dans lequel le latex de caoutchouc naturel est filtré pour éliminer les coagulants.

3. Agent étanchéifiant haute performance selon la Revendication 1, dans lequel le latex de caoutchouc naturel présente une granulométrie moyenne d'environ 400 microns ou moins.

4. Agent étanchéifiant haute performance selon la Revendication 1, dans lequel la poudre inorganique présente une granulométrie moyenne d'environ 150 nanomètres ou moins.

5. Agent étanchéifiant haute performance selon la Revendication 4, dans lequel la poudre inorganique comprend du carbonate de calcium de granulométrie moyenne d'environ 100 nanomètres ou moins.

6. Agent étanchéifiant haute performance selon la Revendication 1, dans lequel le latex de caoutchouc naturel comprend du caoutchouc naturel et de l'ammoniac.

7. Agent étanchéifiant haute performance selon la Revendication 1, dans lequel l'agent antigel comprend environ 30 à 70 % en masse d'éthylène glycol, environ 10 à 50 % en masse de propylène glycol, et environ 10 à 30 % d'eau.

8. Agent étanchéifiant haute performance selon la Revendication 1, comprenant en outre environ 3 à 15 % en masse d'un tackifiant.

9. Agent étanchéifiant haute performance selon la revendication 1, dans lequel :
le latex de caoutchouc naturel présente une granulométrie moyenne d'environ 400 microns ou moins ; et
la poudre inorganique présente une granulométrie moyenne d'environ 150 nanomètres ou moins.

10. Agent étanchéifiant haute performance selon la Revendication 9, comprenant :
environ 30 % à 40 % en masse du latex de caoutchouc naturel ;
environ 0,5 à 2,5 % en masse de la poudre inorganique ;
environ 0,2 à 1,2 % en masse de la suspension de polyamide ; et
environ 40 à 60 % en masse de l'agent antigel.

11. Agent étanchéifiant haute performance selon la Revendication 9, dans lequel l'agent antigel comprend environ 40 à 60 % en masse d'éthylène glycol, environ 20 à 40 % en masse de propylène glycol, et environ 10 à 30 % en masse d'eau.

12. Agent étanchéifiant haute performance selon la revendication 1, dans lequel :
le latex de caoutchouc naturel est filtré et présente une granulométrie moyenne d'environ 400 microns ou moins ;
la poudre inorganique présente une granulométrie moyenne d'environ 100 nanomètres ou moins ;
la suspension de polyamide aqueuse est présente à entre environ 0,10 % et environ 0,50 % en masse ;
l'antigel inclut à la fois de l'éthylène glycol et du propylène glycol ;
et comprenant en outre environ 3 à 15 % en masse d'un tackifiant.

13. Agent étanchéifiant haute performance selon la Revendication 12, dans lequel la suspension de polyamide aqueuse est combinée à de la silice colloïdale aqueuse.
